# EUROPEAN PATENT APPLICATION

(11) **EP 4 653 674 A1**
(43) Date of publication of application: **26.11.2025**
(21) Application number: 24177558.4
(22) Date of filing: 23.05.2024
(51) Int. Cl.: F01P 5/10, F04D 29/58, B60K 11/02, F01P 11/04, F01P 5/12, F04D 29/40

(54) **A THERMAL MANAGEMENT MODULE**

(71) Applicant: VALEO SYSTEMES THERMIQUES, 78320 Le Mesnil Saint-Denis (FR)
(72) Inventor: GUT, Damian, 32 050 Skawina (PL); GAMEIRO, Mickael, 78322 Le Mesnil-Saint-Denis Cedex (FR); NOWAKOWSKI, Adrian, 32 050 Skawina (PL)
(74) Representative: Valeo Powertrain Systems

(57) **Abstract**

The object of the invention is, inter alia, a thermal management module (1000) for a motor vehicle comprising: a main body (100) configured to transfer at least the first fluid, wherein said main body (100) further comprises at least one channel (110) configured to provide at least a first path (110A) and a second path (110B) for the first fluid, at least one nest (120) being integrally formed in the main body (100), and at least one pump (200) arranged in the nest (120), the pump (200) comprising a first circuit (210) being configured to provide fluidal communication between the first path (110A) and the second path (110B), wherein the pump (200) further comprises a pump cooling circuit (220), said circuit (220) further comprising a pump cooling passage (221) comprising a cooling inlet (222) and cooling outlet (223), wherein the main body (100) comprises a first passage (151) configured to provide a direct fluidal communication between the first path (110A) and pump cooling passage (221), and a second passage (152) configured to provide a direct fluidal communication between the second path (110B) and the pump cooling passage (221).

## Description

### FIELD OF THE INVENTION

The invention relates to a thermal management module. In particular, the invention relates to the thermal management module for a motor vehicle.

### BACKGROUND OF THE INVENTION

The thermal management modules, further referred to as modules, may be used in all types of vehicles, including internal combustion engines, hybrid vehicles and electric vehicles. The thermal management module aims to provide as compact assembly as possible, due to the requirements of customers. The modules may comprise one or more heat exchangers, and due to packaging requirements the customers tend to request a high-performance pumps for the fluid included in said modules.

It is known that hydraulic pumps of a certain power need to be cooled, particularly the control and power electronics part and the electromagnetic part. Usually, fins (or ribs) are added to a heat sink that houses an electronic control board. In this way, the heat from the electronics is dissipated.

However, the ribs dissipate the heat only form the surface, and thus they do not cool down the electronics of the pump effectively.

Therefore there is a need to provide a thermal management module which would comprise at least one powerful pump for the fluid with simple, efficient, and inexpensive cooling means for the pump.

### SUMMARY OF THE INVENTION

The object of the invention is, inter alia, a thermal management module for a motor vehicle comprising: a main body configured to transfer at least the first fluid, wherein said main body further comprises at least one channel configured to provide at least a first path and a second path for the first fluid, at least one nest being integrally formed in the main body, and at least one pump arranged in the nest, the pump comprising a first circuit being configured to provide fluidal communication between the first path and the second path, wherein the pump further comprises a pump cooling circuit, said circuit further comprising a pump cooling passage comprising a cooling inlet and cooling outlet, wherein the main body comprises a first passage configured to provide a direct fluidal communication between the first path and pump cooling passage, and a second passage configured to provide a direct fluidal communication between the second path and the pump cooling passage.

Advantageously, the first path is fluidly connected with the cooling outlet.

Advantageously, the second path is fluidly connected with the cooling inlet.

Advantageously, the main body extends along a plane, so that the main body comprises at least one flat portion, said portion being parallel to said plane.

Advantageously, the main body comprises a first nozzle protruding in perpendicular from the flat portion and towards the cooling outlet of the pump.

Advantageously, the first nozzle comprises a first cylindrical portion.

Advantageously, the main body further comprises a second nozzle protruding in perpendicular from the flat portion and towards the cooling inlet of the pump.

Advantageously, the second nozzle comprises a dome portion protruding at least from the main body flat portion.

Advantageously, the pump comprises: a rotor comprising an impeller, a first fluid circuit passing through the rotor so that the first fluid flowing in this circuit is set in motion by the impeller of the rotating rotor, a pump body configured to at least partially encapsulate the rotor and the impeller, wherein at least a portion of the first circuit is configured to intersect said body, wherein the pump body further comprises a first part surrounding at least part of the rotor and/or impeller, and at least a second part adapted to close one of the open ends of the first part.

Advantageously, both cooling inlet and cooling outlet comprise elastic hoses secured to the pump by set of clamps on one end, wherein the elastic hoses are connected to the second cylindrical portion and first cylindrical portion, respectively on the other end of said elastic hoses and secured thereto by another set of clamps.

Advantageously, cooling inlet and cooling outlet comprise a tubular portions protruding from the pump towards the second cylindrical portion and first cylindrical portion, respectively, wherein the tubular portions are inserted into the cylindrical portions.

Advantageously, at least one of the cooling inlet and/or cooling outlet comprises a first projection arranged on the second part of the pump body, and a second projection protruding radially form the first part, wherein the second projection is configured to provide a fluidal communication between the channel and the first projection.

Advantageously, the pump body comprises a insert channel protruding through the first part, wherein the insert channel is configured to fluidly connect the second path of the main body and the second part of the pump body.

Advantageously, the main body comprises a first planar element and a second planar element, wherein the planar elements are joined together to form at least the channel.

Advantageously, the main body is a substantially cuboidal element formed via plastic injection process, wherein at least the first channel unitary with said cuboidal element.

The thermal management module of the present invention allows to dissipate the heat using the coolant fluid circulating in the same fluid path. It allows cooling of the pump and its electronics (PCB), its core, or both directly from the circuit arranged in the main body of the module which provides appropriate pressure.

### BRIEF DESCRITPTION OF DRAWINGS

Examples of the invention will be apparent from and described in detail with reference to the accompanying drawings, in which:
Fig. 1 shows a perspective view of the thermal management module.
Fig. 2 shows a detailed perspective view of the main body with the pump having elastic hoses.
Fig.3 shows a partially transparent side view of the thermal management module of Fig. 2.
Fig. 4 shows a perspective view of the main body with the pump having non- elastic connection in a first variant.
Fig. 5 shows a perspective view of the main body with the pump having non- elastic connection in a second variant.
Fig. 6 shows a partially transparent side view of the thermal management module comprising one of the examples of an insert channel.

### DETAILED DESCRIPTION OF EMBODIMENTS

The subject-matter of the invention is, among others, a thermal management module 1000 for a motor vehicle, which may simply be referred to as "module". The module 1000 usually comprises several sub-components arranged close to each-other. Thus generally speaking, the module 1000 brings as many effects as it has sub-components. The module 1000 thus provides an efficient device with small packaging. Oftentimes the sub-components are fluidly connected to each-other in order to provide desired result in a most efficient way.

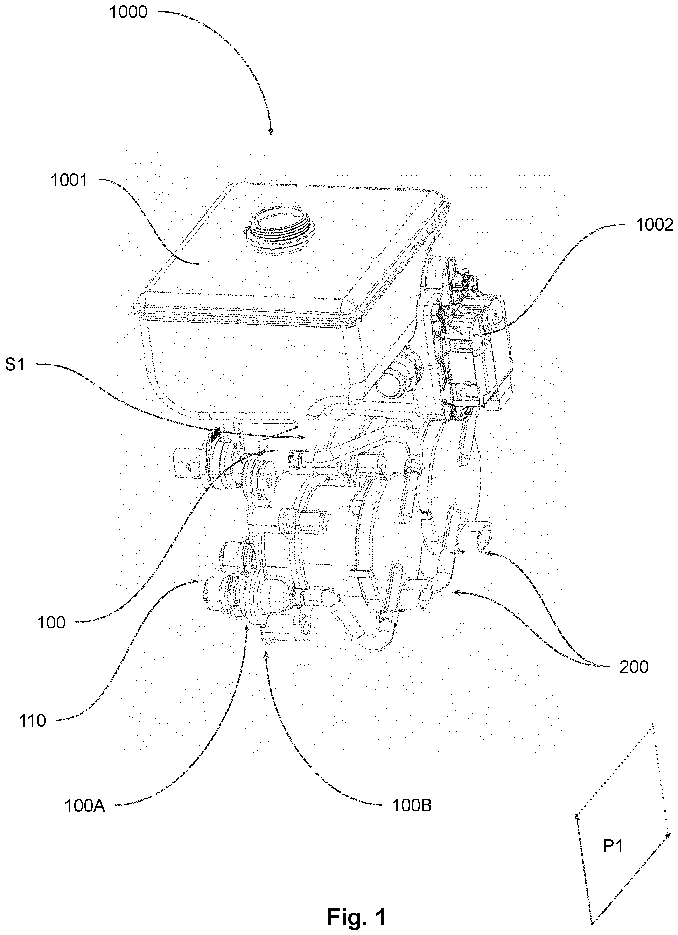

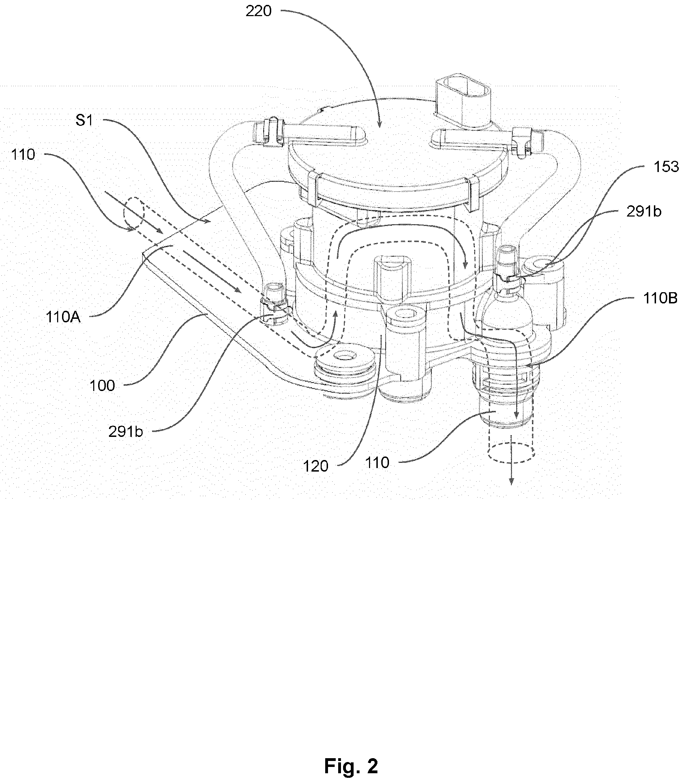

Fig. 1 shows a perspective view of the module 1000. Fig. 1 shows an exemplary orientation of the module 1000 in operational mode. The module 1000 may comprise a reservoir tank 1001, a multi-way valve 1002 which is responsible for distribution of the fluid in and out the module 1000. The module 1000 may also comprise plurality of spigots for connecting said module 1000 to different loops in the motor vehicle. It should be noted that Figs 2-8 have been oriented in a different way than in Fig.1 in order to render the drawings easier to read.

The module 1000 may thus comprise a main body 100 which provides a structural support for the sub-components and is suitable for fluid transfer across its volume.

Referring among others to Fig. 2, the main body 100 may thus be configured to transfer at least the first fluid, wherein the first fluid may be, for example, a coolant. In order to be suitable to transfer any fluid, said main body 100 may further comprise at least one channel 110. The main body 100 may be carried out in different ways and out of different materials. For example, the main body may a unitary, cuboidal element (e.g. brick-shaped element) which is made of synthetic material (e.g. plastic) in the injection molding process. The "brick" may comprise pre-designed channel 110 for the fluid and other elements such as attachment means, incisions which allow to reduce weight, ribs to increase rigidity, etc. Another example is a main body 100 which may be assembly of a first plate 100A and a second plate 100B. The plates 100A, 100B may by substantially planar elements, wherein each of plates 100A, 100B comprises a flat surface so that the plates are complementary. The channel 110 may be formed by two complementary sub-channels, each sub-channels having a substantially half-circle profile, so that when plates 100A,100B are joined together, the channel 110 of the main body 100 comprises a circular cross-section.

In other words, different types and shapes of the main body are envisaged, yet for the sake of the clarity of the description, the invention and its embodiments is presented using the main body 100 made out of first plate 100A and the second plate 100B joined together.

Preferably, the channel 110 has a substantially circular cross-section, yet other shapes of the channel 110 are also envisaged. The channel 110 may also change its cross-section along its axis of extension. In case the channel 110 leads to any sub-component (e.g. heat exchanger), it may be devoid of its continuity in view of the main body 100. Thus, as hydraulic communication may be anticipated, the channel 110 may comprise a first path 110A which may be regarded as portion of the channel 110 which is arranged prior to the sub-component fixed to the main body 100, and a second path 110B which may be regarded as the portion of the channel 100 arranged after said sub-component.

Accordingly, the main body 100 may extend along a plane P1, so that the main body 100 comprises at least one flat portion S1. This portion S1 is arranged in parallel with respect to said plane P1. In other words, the main body 100 comprises a flat portion S1 which determines the general plane P1 of the main body 100. It should be noted that the main body 100 in figures 2-8 has been rotated from substantially vertical orientation to substantially horizontal orientation, thus the orientation of the general plane P1 and the flat portion S1 in Figs 2-8 has been adapted accordingly.

In view of the above, the channel 110 is configured to provide at least a first path 110A and a second path 110B for the first fluid. Fig. 2 shows an exemplary path for the first fluid. The dashed lines shown on the main body 100 show an example of how the channel 110 may go through the main body 100. The same dashed lines show possible location of the first path 110A and the second path 110B.

The main body 100 may further comprise at least one nest 120 being integrally formed in said body 100. In other words, the nest 120 protrudes directly from the main body 100. The nest 120 may be in a form of collar protruding preferably perpendicularly with respect to the flat portion S1. The nest 120 may comprise a final edge, wherein the surface of the edge is substantially parallel to the flat portion S1. The final edge and the flat portion delimit the height of the nest 120, wherein the height of the nest 120 is measured in perpendicular to the plane P1. The nest 120 may further comprise a hollow area which is delimited by the collar and the final edge. The hollow area may be configured to receive sub-components such as electric pump, etc.

Consequently, the module 1000 may further comprise at least one pump 200 arranged in the nest 120. The pump 200 may be in particular so-called electric water pump (EWP), yet other types of pumps are also envisaged.

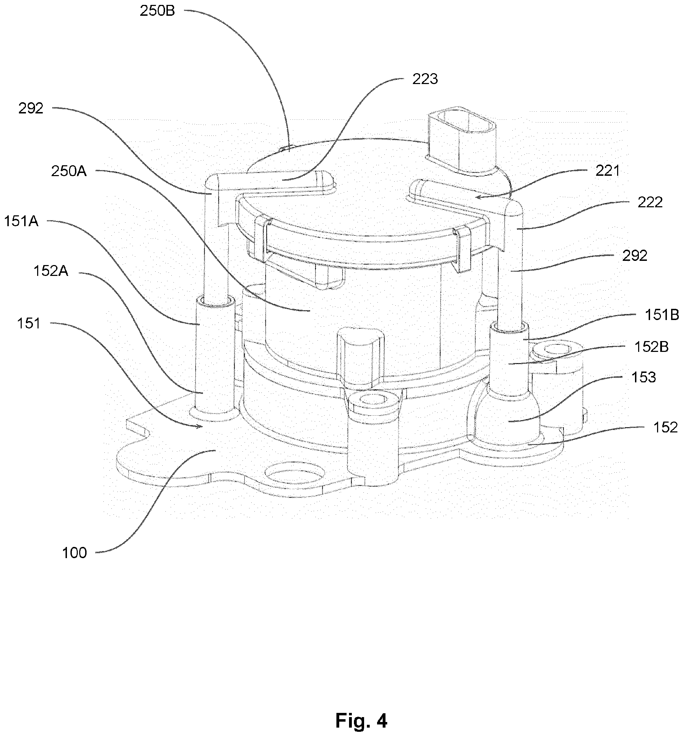

Referring to Fig. 4, the pump 200 may comprise a rotor 230 with an impeller 240. The pump is of the centrifugal type. The first fluid is the heat transfer fluid, so it may be water, glycol-water solution, oil, a dielectric fluid or any other fluid. The rotor 230 may comprise a shaft which has an axis of rotation, and an electromagnetic actuator with one or more magnets. The shaft carries both the electromagnetic actuator and the impeller 240. In the figures, the details of the pump 200 are reduced to minimum, for the sake of clarity of the drawings.

The impeller 240 is set in motion so that the first fluid may circulate. Consequently, a low pressure zone is created between the first path 110A and the impeller 240 so that the first fluid is sucked towards the second path 110B, where the high pressure zone is formed between the impeller 240 and said second path 110B of the channel 110.

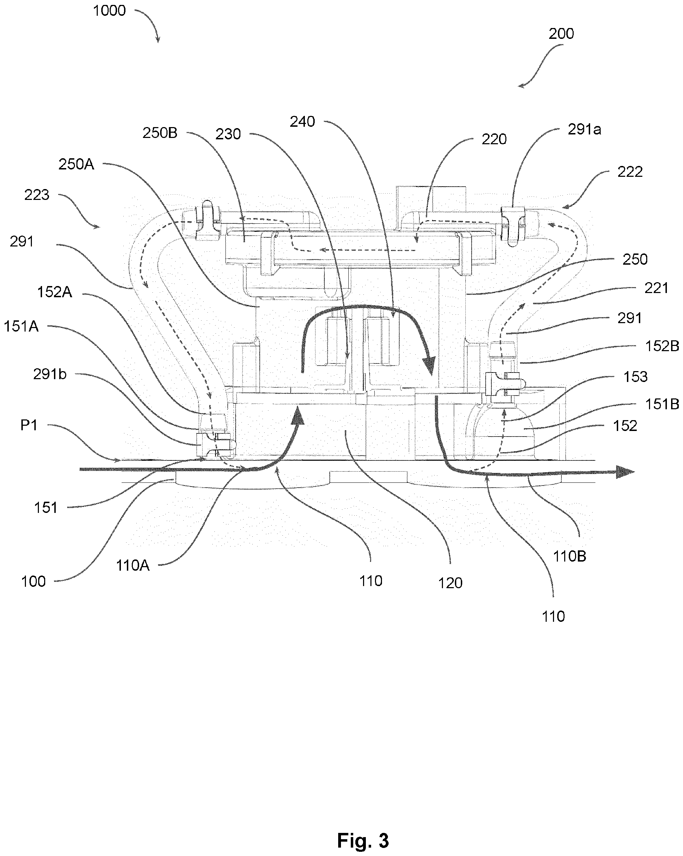

In order to enable first fluid circulation through the pump 200, said pump 200 further comprises a first fluid circuit 210 passing through the rotor 230 so that the first fluid flowing in this circuit 210 is set in motion by the impeller 240 of the rotating rotor 230. The first fluid circuit 210 is shown both in Figure 2 and in Figure 3.

The pump 200 may further comprise a pump body 250. The pump body 250 may be regarded as all elements forming the housing for pump 200 components. The pump body 250 may provide a hydraulic communication between the first path 110A and the second path 110B. The pump body 250 is configured to at least partially encapsulate the rotor 230 with the impeller 240. In one embodiment, the rotor 230 may protrude beyond the outline of the pump body 250, so that part of the rotor is accommodated also in the nest 120. Alternatively, the entire rotor 230 may remain within the outline of the pump body 250. This may allow the nest 120 to be of more compact size.

The pump body 250 may be associated with the vessel so that it has one open end. The open end of the pump body may comprise a pump body edge which may be complementary final edge of the nest 120, so that a firm, fluid-tight connection is formed. Alternatively, the pump body 250 may comprise an intermediate element, such as a flange 300 arranged in-between the final edge of the nest 120 and the pump body edge. The flange 300 may comprise a means for attaching the pump 200 to the main body 100. The flange may be unitary with the pump body 250 so that the pump 200 may be secured to the main body 100 by screws.

At least a portion of the first circuit 210 is configured to intersect the pump body 250 in order to build the pressure of the first fluid flowing therein. As already mentioned, the pump body 250 may be in form of a vessel which is as unitary element. On one hand, it would require fewer process steps and fewer parts to provide such unitary element. On the other hand such process would be pretty difficult and precise, and therefore it would generate costs. On top of that, it might render pump 200 non-serviceable, what can be problematic both for customers, and for the end users.

Accordingly, the pump body 250 may further comprise a first part 250A surrounding at least part of the rotor 230 and/or impeller 240, and at least a second part 250B adapted to close one of the open ends of the first part 250A.

As the impeller 240 sets into motion great volumes of the first fluid, the entire pump 200 may suffer overheating. The overheating may impact the efficiency of the pump 200 or even reduce service life thereof. Further, an improper functionality of the pump 200 may lead to malfunction of the entire vehicle. Therefore the cooling of pump 200 is needed to provide optimal efficiency of the pump 200 and increase its service life.

The pump 200 comprises the first circuit 210 being configured to provide fluidal communication between the first path 110A and the second path 110B of the main body 100, however, in order to provide a cooling of the pump 200, said the pump 200 may further comprise a pump cooling circuit 220.

The cooling circuit 220 may further comprise a pump cooling passage 221. The cooling circuit 220 generally describes an intended first fluid flow in the pump 200 having a proper direction, adapted to provide the best cooling efficiency for the pump 200.

The cooling passage 221 may be simply regarded as the elements providing a passage for the first fluid in the pump 200. The cooling passage 221 may begin and/or end at the border of what can be associated with the main body 100 and what can be associated with the pump 200.

The pump 200 may further comprise a cooling inlet 222 for ingress of the first fluid into the cooling passage 221 and cooling outlet 223 for egress of the first fluid from the cooling passage 221. There may be different types of inlets 222 and/or outlets 223 described in further paragraphs, yet regardless its type, the inlet 222 and outlet 223 shall be regarded as part of the pump 200, not the main body 100.

In order to provide a first fluid flow in the cooling passage 221, the main body 100 may comprise a first passage 151 configured to provide a direct fluidal communication between the first path 110A and pump cooling passage 221, and a second passage 152 configured to provide a direct fluidal communication between the second path 110B and the pump cooling passage 221. As the consequence, the cooling passage 221 is fed with first fluid of high velocity, as the second passage 151 is located at the outlet of the pump 200. As the first fluid completes its path along the cooling passage 221, it is returned to the first path 110A by the first passage 151.

Naturally, the first path 110A is fluidly connected with the cooling outlet 223 as well as the second path 110B is fluidly connected with the cooling inlet 222.

In order to provide fluid-tight communication between the cooling passage 221 and the main body 100, the main body 100 may comprise a first nozzle 151A. The first nozzle 151A protrudes substantially in perpendicular from the flat portion S1 and towards the cooling outlet 223 of the pump 200. The word substantially perpendicular includes deviations of the angle formed by the main axis of the extension of the first nozzle 151A and the flat portion S1. The deviation may be from 5 to 45 degrees. In other words, the fist nozzle 151A may be inclined with respect to the flat portion S1 of the main body 100 between 5 and 45 degrees.

Analogically, the main body 100 further comprises a second nozzle 152B protruding in perpendicular from the flat portion S1 and towards the cooling inlet 222 of the pump 200. The word substantially perpendicular includes deviations of the angle formed by the main axis of the extension of the second nozzle 151B and the flat portion S1. The deviation may be from 5 to 45 degrees. In other words, the second nozzle 151B may be inclined with respect to the flat portion S1 of the main body 100 between 5 and 45 degrees.

The first nozzle 151A may be of any desired shape of the cross-section, yet it is proven that substantially circular cross-section is reliable and promotes optimized flow of the first fluid. Therefore, the first nozzle 151A may comprise a first cylindrical portion 152A. The first cylindrical portion 152A facilitates the fluidal connection between the main portion 100 and the cooling outlet 223 of the pump 200.

Analogically, the second nozzle 151B may be of any desired shape of the cross-section, yet it is proven that substantially circular cross-section is reliable and promotes optimized flow of the first fluid. Therefore, the second nozzle 151B may comprise a second cylindrical portion 152B. The second cylindrical portion 152B facilitates the fluidal connection between the main portion 100 and the cooling inlet 222 of the pump 200.

The first nozzle 151A may be arranged anywhere on the main body 100 the as long as it has a fluidal connection with the first path 110A. The second nozzle 151B may be arranged anywhere on the main body 100 as long as it has a fluidal connection with the second path 110B.

In order to improve packaging the second nozzle 151B and/or the first nozzle 151A may be modified. One of the possible improvements is described in next paragraph, based on the improvement to second nozzle 151B.

In particular, the second nozzle 151B may further comprise a substantially dome portion 153 protruding at least from the main body flat portion S1. As presented in figures, the dome portion 153 protrudes partially from the flat portion and partially from the nest 152. Consequently a shape which can be named a half-dome can be obtained. It allows the short path for the fluid from the first fluid circuit 210 flowing from the rotor 230 and into the cooling inlet 222 of the cooling circuit 221.

In this configuration the dome portion protrudes partially from the nest 120 of the main body 100, and a second cylindrical portion 152B protrudes directly from the dome portion 153.

In one aspect of the invention as shown in Figs 1-3, at least a cooling inlet 222 and/ or cooling outlet 223 may comprise an elastic hose 291. In the figures, both cooling inlet 222 and cooling outlet 223 comprise elastic hoses 291 secured to the pump 200 by set of clamps 291a. In particular, the one end of the elastic hose 291 is fixed to the cylindrical portions protruding form the second part 250B of the pump body 250.

The elastic hoses 291 are connected to the second cylindrical portion 152B and first cylindrical portion 152A, respectively on the other end of said elastic hoses 291 and secured thereto by another set of clamps 291b. The elastic clamps 291a, 291b are just exemplary means of fixing the elastic hoses 291. The other means of connecting the elastic hoses 291 to the pump 200 or to the main body 100 are also envisaged.

The inner diameter of the elastic hoses 291 shall be selected accordingly in order to provide a fluid-tight connection between the hose 291 and the cooling inlet 222 and/ or cooling outlet 223.

In another aspect of the invention shown in Fig. 4, the cooling inlet 222 and cooling outlet 223 may comprise a tubular portions 292. The tubular portions 292 may protrude from the pump 200 towards the second cylindrical portion 152B and first cylindrical portion 152A, respectively. More precisely, the tubular portions protrude from the second part 250B of the pump 200. The tubular portion 292 is devoid of contact with the first part 250A of the pump 200, therefore providing a lightweight, direct fluidal communication between the cooling inlet 222 and/or outlet 223 and the main body 100.

The tubular portions 292 are inserted into the cylindrical portions 152A, 152B. For this reason it is preferred that the inner diameter of the second nozzle 151B and/or the first nozzle 151A is greater than the outer diameter of the tubular portion 292 which is connected to either of these nozzles 151A, 151B. Alternatively, the inner diameter of the second nozzle 151B and/or the first nozzle 151A may be smaller than the outer diameter of the tubular portion 292 which is connected to either of these nozzles 151A, 151B. In order to improve the fluid-tightness of the connection between the nozzle 151A, 151B and the tubular portions 292, a gasket may be implemented so that said gasket is between the nozzle , and the respective tubular portion 292.

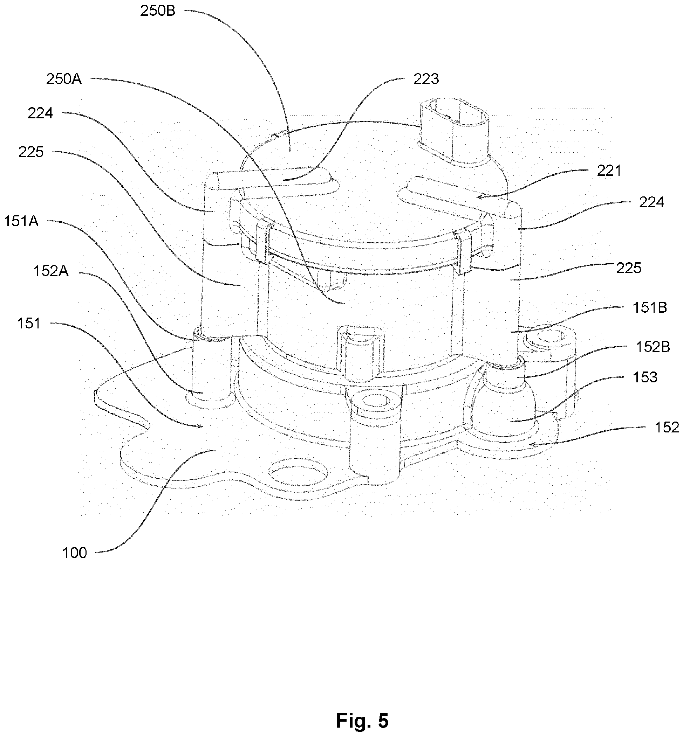

In another aspect of the invention shown in Fig. 5, at least one of the cooling inlet 222 and/or cooling outlet 223 may comprise a first projection 224 arranged on the second part 250B of the pump body 250, and a second projection 225 protruding radially form the first part 250A. In other words, the second projection 225 extends outwardly from the first part 250A of the pump 200. This allows to improve the strength of the cooling inlet 222 and/ or the cooling outlet 223, and consequently it improves the mechanical strength of the entire pump 200.

The first projection 224 and the second projection 225 both comprise a channel for the fluid, so that the second projection 225 is fluidly connected with the first projection 224. In other words, the second projection 225 is configured to provide a fluidal communication between the channel 110 and the first projection 224.

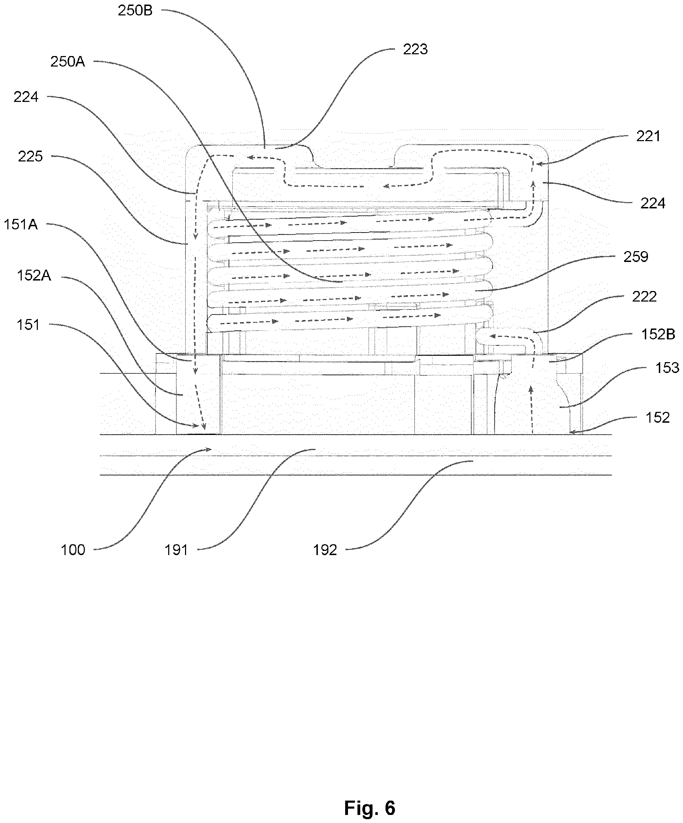

In another aspect of the invention shown in Fig. 6, the pump body 250 may comprise an insert channel 259. The insert channel 259 allows not only to cool down the electronics of the pump 200, but also its body 250. In contrast to the embodiments discussed above, the insert channel 259 provides longer path for the first fluid, through the second part 250B of the pump 200.

The insert channel 259 is configured to fluidly connect the second path 110B of the main body 100 and the second part 250B of the pump body 250. In particular, the cooling inlet 222 may be fluidly connected with the insert channel 259. The cooling outlet 223 may be fluidly connected with the first path 110A by, for example already discussed projections 223, 224, tubular portion 292, or elastic hose 291.

The insert channel 259 may be of different form. For example, the second part 250B may comprise two annular passages (not shown) spaced apart from each other at the both ends of the second part 250B which are connected by sub-passages(not shown). The sub-passages may be arranged in perpendicular with respect to the axis of the annular passages. Alternatively, the sub-passages may be arranged in slanted arrangement with respect to the axis of the annular passages.

Alternatively, the insert channel 259 may be in a form of a helical passage, as shown in Fig. 6.

Referring further to Fig.6, the helical passage may be formed at an outer periphery of the pump body 250, so that the helix is integrated in the second part 250B. The helical passage is configured to fluidly connect the second path 110B of the main body 100 and the second part 250B of the pump body 250. In particular, the cooling inlet 222 may be fluidly connected with the helical passage. The cooling outlet 223 may be fluidly connected with the first path 110A by, for example already discussed projections 223, 224, tubular portion 292, or elastic hose 291.

Other variations of the insert channel 259 are also envisaged.

As the pump body 250, including the second part 250B is preferably made of synthetic material, the insert channel 259 requires precise formation thereof.

One of the examples which allows formation of the insert channel 259 is by so-called overmolding said insert channel 259 into the pump body 250, namely the second part 250B. It is preferable, that the insert channel 259 is made of material having bigger heat capacity compared to overmolding material (i.e. synthetic material). For this reason, it is preferred that the insert channel 259 is made of metallic material (e.g. aluminum), whereas the pump body is made of 250 synthetic material (e.g. plastics).

An alternative example which allows formation of the insert channel 259 is by 3D printing the entire pump body 250, so that the insert channel 259 is formed right away in the pump body 250. Although this method is currently expensive and time consuming, it allows formation of the insert channel 259 of the same material as the pump body 250. It should be noted that other methods of creating the insert channel 259 are also envisaged.

One of the advantages of aforementioned features is the compatibility with different forms of the main body 100. The main body 100 be assembled out of two prefabricated plates which are joined together to form a conduit for the first fluid. Thus, the main body may comprise a first planar element 191 and a second planar element 192. The planar elements 191, 192 may be made of synthetic material such as plastic. In this case, the planar elements may be joined together at high temperature or glued together. The planar elements 191, 192 are joined together to form at least the channel 110.

Alternatively, the main body 100 is a substantially cuboidal element 193 formed via plastic injection process, provided that at least the channel 110 is provided therein. Said first channel 110 may unitary with said cuboidal element 193. The cuboidal element 193 may comprise various incisions to reduce the weight of the main body 100.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A thermal management module (1000) for a motor vehicle comprising: a main body (100) configured to transfer at least the first fluid, wherein said main body (100) further comprises at least one channel (110) configured to provide at least a first path (110A) and a second path (110B) for the first fluid, at least one nest (120) being integrally formed in the main body (100), and at least one pump (200) arranged in the nest (120), the pump (200) comprising a first circuit (210) being configured to provide fluidal communication between the first path (110A) and the second path (110B), wherein the pump (200) further comprises a pump cooling circuit (220), said circuit (220) further comprising a pump cooling passage (221) comprising a cooling inlet (222) and cooling outlet (223), wherein the main body (100) comprises a first passage (151) configured to provide a direct fluidal communication between the first path (110A) and pump cooling passage (221), and a second passage (152) configured to provide a direct fluidal communication between the second path (110B) and the pump cooling passage (221).

2. The thermal management module (1000) according to claim 1, wherein the first path (110A) is fluidly connected with the cooling outlet (223).

3. The thermal management module (1000) according to any of the preceding claims, wherein the second path (110B) is fluidly connected with the cooling inlet (222).

4. The thermal management module (1000) according to any of the preceding claims, wherein the main body (100) extends along a plane (P1), so that the main body (100) comprises at least one flat portion (S1), said portion (S1) being parallel to said plane (P1).

5. The thermal management module (1000) according to claim 4, wherein the main body (100) comprises a first nozzle (151A) protruding in perpendicular from the flat portion (S1) and towards the cooling outlet (223) of the pump (200).

6. The thermal management module (1000) according to claim 5, wherein the first nozzle (151A) comprises a first cylindrical portion (152A).

7. The thermal management module (1000) according to any of claims 4-6, wherein the main body (100) further comprises a second nozzle (152B) protruding in perpendicular from the flat portion (S1) and towards the cooling inlet (222) of the pump (200).

8. The thermal management module (1000) according to claim 7, wherein the second nozzle (152B) comprises a dome portion (153) protruding at least from the main body flat portion (S1)

9. The thermal management module (1000) according to any of the preceding claims, wherein the pump (200) comprises:
- a rotor (230) comprising an impeller (240)
- a first fluid circuit (210) passing through the rotor (230) so that the first fluid flowing in this circuit (210) is set in motion by the impeller (240) of the rotating rotor (230),
- a pump body (250) configured to at least partially encapsulate the rotor (230) and the impeller (240), wherein at least a portion of the first circuit (210) is configured to intersect said body (250), wherein the pump body (250) further comprises a first part (250A) surrounding at least part of the rotor (230) and/or impeller (240), and at least a second part (250B) adapted to close one of the open ends of the first part (250A).

10. The thermal management module (1000) according to any of claims 5-9, wherein both cooling inlet (222) and cooling outlet (223) comprise elastic hoses (291) secured to the pump (200) by set of clamps (291a) on one end, wherein the elastic hoses (291) are connected to the second cylindrical portion (152B) and first cylindrical portion (151B), respectively on the other end of said elastic hoses (291) and secured thereto by another set of clamps (291b).

11. The thermal management module (1000) according to any of claims 5-9, wherein cooling inlet (222) and cooling outlet (223) comprise a tubular portions (292) protruding from the pump (200) towards the second cylindrical portion (152B) and first cylindrical portion (151B), respectively, wherein the tubular portions (292) are inserted into the cylindrical portions (151A, 151B).

12. The thermal management module (1000) according to any of claims 5-9, wherein at least one of the cooling inlet (222) and/or cooling outlet (223) comprises a first projection (224) arranged on the second part (250B) of the pump body (250), and a second projection (225) protruding radially form the first part (250A), wherein the second projection (225) is configured to provide a fluidal communication between the channel (110) and the first projection (224).

13. The thermal management module (1000) according to any of claims 5-9 or 12, wherein the pump body (250) comprises at least one insert channel (259) integrated in the first part (250B), wherein the configured to fluidly connect the second path (110B) of the main body (100) and the second part (250B) of the pump body (250).

14. The thermal management module (1000) according to any of the preceding claims, wherein the main body (100) comprises a first planar element (191) and a second planar element (192), wherein the planar elements (191, 192) are joined together to form at least the channel (110).

15. The thermal management module (1000) according to any of claims 1-14, wherein the main body (100) is a substantially cuboidal element (193) formed via plastic injection process, wherein at least the first channel (110) unitary with said cuboidal element (193).
